(19) Europäisches Patentamt
European Patent Office
Office européen des brevets

(11) **EP 2 518 717 A1**

(12) **EUROPEAN PATENT APPLICATION**

(43) Date of publication:
**31.10.2012 Bulletin 2012/44**

(51) Int Cl.:
***G09G 3/36*** *(2006.01)*

(21) Application number: **11182665.7**

(22) Date of filing: **26.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.04.2011 KR 20110038517**

(71) Applicant: **Samsung Electronics Co., Ltd.**
**Suwon-si, Gyeonggi-do, 443-742 (KR)**

(72) Inventors:
• **Kim, Hoon**
**701-1604 Gyeonggi-do (KR)**
• **Shin, Ki Chul**
**304-2304 Chungcheongnam-do (KR)**

• **Kim, Su Jeong**
**B-401 Seoul (KR)**
• **Oh, Ho Kil**
**Ganet-803 Chungcheongnam-do (KR)**
• **Jung, Jae-Hoon**
**101-22 (5/2) Incheon (KR)**

(74) Representative: **Dr. Weitzel & Partner**
**Patentanwälte**
**Friedenstrasse 10**
**89522 Heidenheim (DE)**

Remarks:
A request for correction of the drawings has been filed pursuant to Rule 139 EPC. A decision on the request will be taken during the proceedings before the Examining Division (Guidelines for Examination in the EPO, A-V, 3.).

(54) **Liquid crystal display**

(57) A liquid crystal display according to exemplary embodiments of the present invention includes: an insulation substrate; a first gate line and a second gate line formed on the insulation substrate; a data line intersecting the first gate line and the second gate line; a plurality of pixels respectively including a first subpixel and a second subpixel connected to the first gate line and the data line; a first switching element connected to the first gate line and to control a voltage of the first capacitor connected to the first subpixel electrode of the first subpixel; and a second switching element connected to the second gate line to control the voltage of the first capacitor.

FIG. 3

**Description**

BACKGROUND OF THE INVENTION

FIELD OF THE INVENTION

Exemplary embodiments of the present invention relates to a liquid crystal display.

DESCRIPTION OF THE BACKGROUND

A liquid crystal display (LCD) has been adopted as one of the most widely used flat panel displays (FPD) applicable to various electronics devices.

Typically, the liquid crystal display includes switching elements each connected to pixel electrodes, and a plurality of signal lines such as data lines and gate lines are configured to apply voltages to the pixel electrodes by controlling the switching elements.

The liquid crystal display receives an input image signal from an external graphics controller, the input image signal contains luminance information of each pixel PX, and the luminance has grays of a given quantity. Each pixel is applied with the data voltage corresponding to the desired luminance information. The data voltage applied to the pixel appears as a pixel voltage according to a difference with reference to the common voltage, and each pixel displays the luminance representing a gray of the image signal according to the pixel voltage. Here, the range of the pixel voltage that is applicable to the liquid crystal display is determined according to a driver.

However, a conventional approach may have a cost problem as the driver of the liquid crystal display requires to be mounted on the display panel in a form of a plurality of IC chips or a flexible circuit film that increase a manufacturing cost of the liquid crystal display. Particularly, as the number of data lines applying the data voltage increases, the cost of the driver of the liquid crystal display is increased.

Thus, there is a need for an approach to provide a liquid crystal display capable of providing enhanced side visibility yet reducing cost of a driver of the liquid crystal display.

The above information disclosed in this Background section is merely to address problems of conventional approaches in light of understanding of the background of the invention.

SUMMARY OF THE INVENTION

Exemplary embodiments of the present invention provides a liquid crystal display capable of improving side visibility of a liquid crystal display and reducing the cost of a driver of the liquid crystal display by reducing a number of data lines, and improving a driving method.

Additional features of the invention will be set forth in the description which follows, and in part will be apparent from the description, or may be learned by practice of the invention.

Exemplary embodiments of the present invention disclose a display. The display includes a substrate. The display also includes a gate line including a first gate line and a second gate line, and a data line that are formed on the substrate. The display includes a plurality of pixels comprising a first subpixel and a second subpixel connected to the first gate line and the data line. The first subpixel includes a first subpixel electrode and the second subpixel includes a second subpixel electrode. The display includes a switching element including a first switching element and a second switching element. The first switching element is connected to the first gate line and to control a voltage of a first capacitor which is connected to the first subpixel electrode of the first subpixel. And, the second switching element is connected to the second gate line and to control the voltage of the first capacitor.

It is to be understood that both the foregoing general description and the following detailed description are exemplary and explanatory and are intended to provide further explanation of the invention as claimed.

BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.

FIG. 1 is a block diagram of a liquid crystal display according to exemplary embodiments of the present invention.

FIG. 2 is a circuit diagram showing a structure of a liquid crystal display and one pixel according to exemplary embodiments of the present invention.

FIG. 3 is a circuit diagram of a liquid crystal display according to exemplary embodiments of the present invention.

FIG. 4 is a diagram explaining a voltage variation associated with timing of a gate signal applied to the driving circuit of FIG. 3.

FIG. 5 is a graph showing exemplary simulations of driving of a liquid crystal display including the driving circuit of FIG. 4.

FIG. 6 is a layout view of a pixel of a thin film transistor array panel including the driving circuit of FIG. 3.

FIG. 7 is a cross-sectional view taken along the line VII-VII of FIG. 6.

FIG. 8 is a cross-sectional view taken along the line VIII-VIII of FIG. 6.

FIG. 9 is a cross-sectional view taken along the line IX-IX of FIG. 6.

FIG. 10 is a circuit diagram of a driving circuit of a liquid crystal display according to exemplary embodiments of the present invention.

FIG. 11 is a diagram explaining a voltage variation of timing of a gate signal applied to the driving circuit of FIG. 10.

FIG. 12 is a graph showing simulations of driving of a liquid crystal display including the driving circuit of FIG. 10.

FIG. 13 is a layout view of a pixel of a thin film transistor array panel including the driving circuit of FIG. 10.

FIG. 14 is a cross-sectional view taken along the line XIV-XIV of FIG. 13.

FIG. 15 is a cross-sectional view taken along the line XV-XV of FIG. 13.

DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

In the drawings, the thickness of layers, films, panels, and regions may be exaggerated for clarity illustrations. Like reference numerals designate like elements throughout the specification. It will be understood that when an element such as a layer, film, region, or substrate can be referred to as being "on" another element, it can be directly on the other element or intervening elements may also be present. In contrast, when an element is referred to as being "directly on" another element, there may be no intervening elements present.

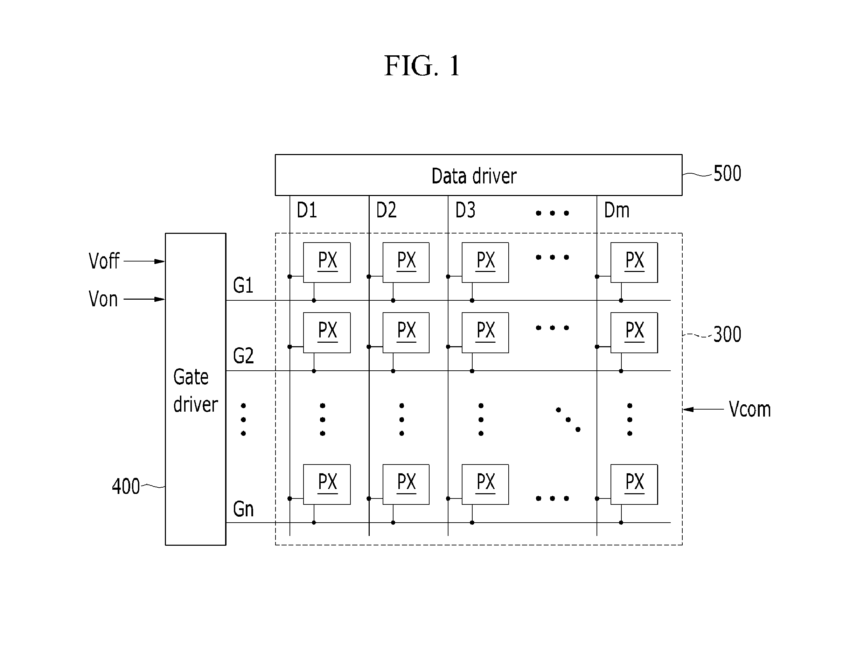

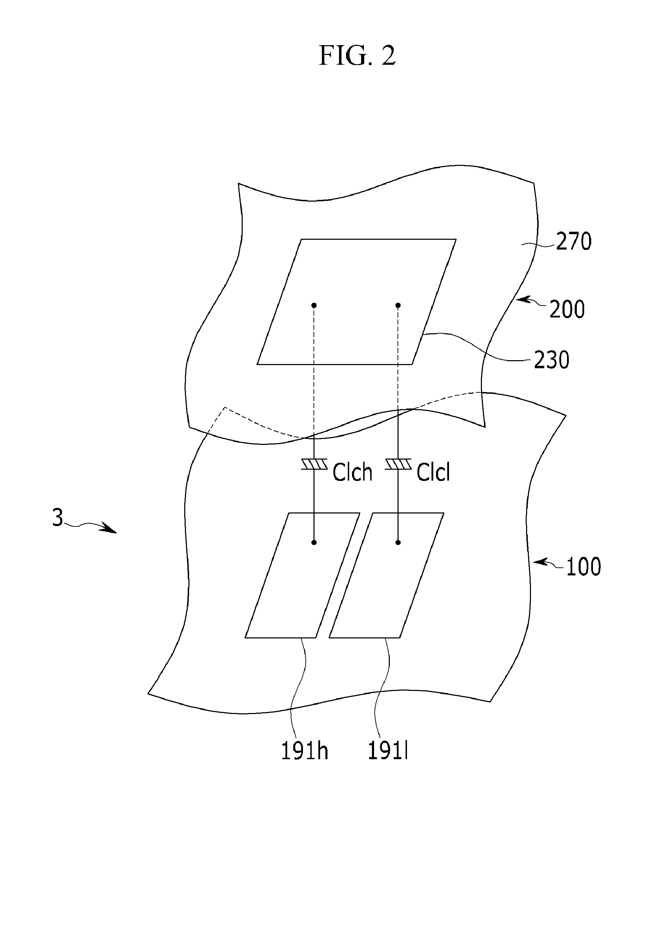

A liquid crystal display according to exemplary embodiments of the present invention will be described with reference to FIG. 1 and FIG. 2.

FIG. 1 is a block diagram of a liquid crystal display according to exemplary embodiments of the present invention, and FIG. 2 is a circuit diagram showing a structure of a liquid crystal display and one pixel according to exemplary embodiments of the present invention.

As shown in FIG. 1, a liquid crystal display according to exemplary embodiments of the present invention may include a liquid crystal panel assembly 300, a gate driver 400, and a data driver 500.

In a circuit, the liquid crystal panel assembly 300 may include a plurality of signal lines G1 -Gn and D1-Dm, and a plurality of pixels PX that are connected to the signal lines and are arranged in an approximate matrix. Meanwhile, referring to the structure shown in FIG. 2, the liquid crystal panel assembly 300 may include lower and upper display panels 100 and 200 that face each other, and a liquid crystal layer 3 interposed therebetween.

For example, the signal lines G1-Gn and D1-Dm are provided on the lower panel 100, and include a plurality of gate lines G1-Gn that transmit gate signals (also referred to as "scanning signals"), and a plurality of data lines D1-Dm that transmit data signals. The gate lines G1 -Gn substantially extend in a row direction and parallel to each other, and the data lines D1-Dm substantially extend in a column direction and parallel to each other.

Each pixel PX, for example the pixel PX connected to the i-th (i=1, 2, ..., n) gate line Gi) and the j-th (j=1, 2, ..., m) data line Dj) includes a pair of subpixels, and each subpixel includes first and second liquid crystal capacitors Clch and Clcl. Two subpixels further include a switching element (not shown) connected to the gate lines G1-Gn, the data lines D1-Dm, and the liquid crystal capacitors Clch and Clcl.

For example, the first liquid crystal capacitor Clch and the second liquid crystal capacitor Clcl include first subpixel electrode 191h and second subpixel electrode 1911 of the lower panel 100 and a common electrode 270 of the upper panel 200 as two terminals. The liquid crystal layer 3 between the two terminals serves as a dielectric material

The pair of subpixel electrodes 191h and 1911 are separated from each other and form one pixel electrode 191. The common electrode 270 is formed on the whole surface of the upper panel 200 and is applied with the common voltage Vcom. The liquid crystal layer 3 has negative dielectric anisotropy, and liquid crystal molecules of the liquid crystal layer 3 may be aligned such that their major axes are perpendicular to the surfaces of the two display panels when an electric field is not applied. Differently from FIG. 2, for example, the common electrode 270 may be formed on the lower panel 100, and at least one of the two electrodes 191 and 270 may have a linear shape or a bar shape.

Meanwhile, for color display, each pixel PX uniquely displays one of three primary colors (spatial division) or each pixel PX alternately displays the three primary colors (temporal division) as time passes, and a desired color is recognized by a spatial or temporal sum of the primary colors. For example, the primary colors can be three primary colors of red, green, and blue. FIG. 2 shows a color filter 230 displaying one of primary colors on a region of the upper panel 200 by each of the pixels as an example of spatial division. Unlike the case of FIG. 2, the color filter 230 may be provided on or under the subpixel electrodes 191h and 1911 of the lower panel 100.

Polarizers (not shown) may be provided on the outer surface of the display panels 100 and 200, and polarization axis of the two polarizers may be crossed.

Referring again to FIG. 1, for example, the data driver 500 is connected to the data lines D1-Dm of the liquid crystal panel assembly 300, and applies the data voltage to the data lines D1-Dm.

The gate driver 400 is connected to the gate lines G1 to Gn of the liquid crystal panel assembly 300, and applies gate signals obtained by combining a gate-on voltage Von for turning on a switching element and a gate-off voltage Voff for turning off the switching element to the gate lines G1 to Gn.

Next, a driving method of a liquid crystal display will be described with reference to a circuit according to exemplary embodiments of the present invention including this pixel.

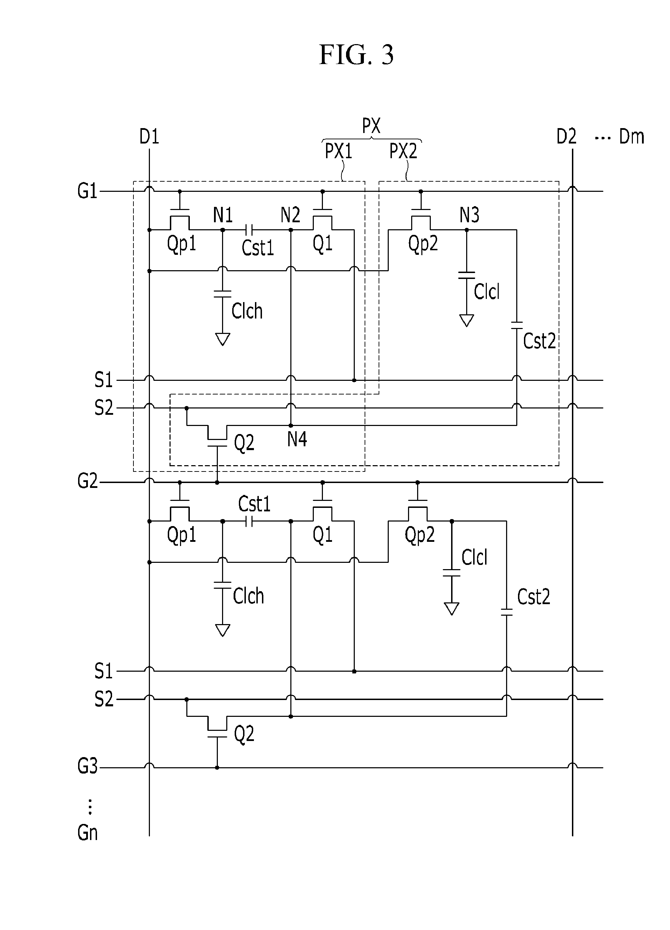

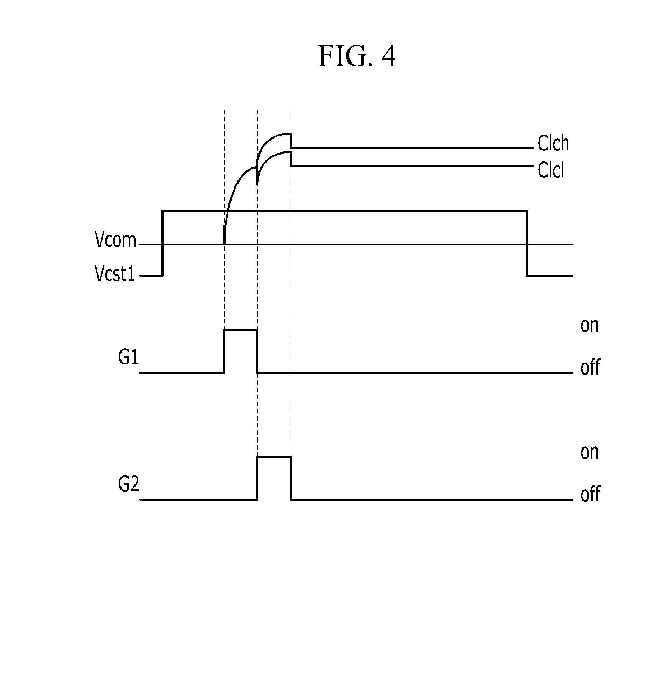

FIG. 3 is a circuit diagram of a liquid crystal display according to exemplary embodiments of the present invention, and FIG. 4 is a view to explain a voltage variation of timing of a gate signal applied to the driving circuit of FIG. 3.

Referring to FIG. 3, for example, the liquid crystal display includes a plurality of first signal lines G1-Gn and second signal lines D1-Dm intersecting each other, and third signal lines S1 and S2. The first signal lines G1-Gn (hereafter referred to as "gate lines") transmit the gate signal (hereafter referred to as "scanning signal"), the second signal lines D1-Dm (hereafter referred to as "data lines") transmit the data voltage (hereafter referred to as "image signal"), and the third signal lines S 1 and S2 include the first voltage line S 1 and the second voltage line S2 transmitting a predetermined voltage.

The pixel PX includes a first pixel switching element Qp1, a second pixel switching element Qp2 connected to the first gate line and the data line, and a first liquid crystal capacitor Clch and a second liquid crystal capacitor Clcl respectively connected thereto.

The first pixel switching element Qp1 and the second pixel switching element Qp2 are three-terminal elements of a thin film transistor, and the first pixel switching element Qp1 includes the control terminal connected to the first gate line G1, the input terminal connected to the data line D1, and the output terminal connected to the first liquid crystal capacitor Clch. Also, the second pixel switching element Qp2 includes the control terminal connected to the first gate line G1, the input terminal connected to the data line D1, and the output terminal connected to the second liquid crystal capacitor Clcl.

The pixel PX includes a first capacitor Cst1 connected to the first liquid crystal capacitor Clch and a second capacitor Cst2 connected to the second liquid crystal capacitor Clcl. The first capacitor Cst1 is connected to the first switching element Q1 and the second switching element Q2 to control a voltage Vcst1 of the first capacitor Cst1, and the second capacitor Cst2 is connected to the second switching element Q2.

In the first switching element Q1 and the second switching element Q2 as three-terminal elements such as thin film transistors, the first switching element Q1 includes the control terminal connected to the first gate line G1 and the input terminal connected to the first voltage line S1. Also, the second switching element Q2 includes the control terminal connected to the second gate line G2, the input terminal connected to the second voltage line S2, and the output voltage connected to the first capacitor Cst1 and the second capacitor Cst2.

Referring to FIG. 3 and FIG. 4, for example, if the first gate line G1 is applied with the gate on voltage, the data voltage is respectively applied to the first pixel electrode and the second pixel electrode through the turned on first pixel switching element Qp1 and second pixel switching element Qp2. The first pixel switching element Qp1 and the second pixel switching element Qp2 are connected to the same data line D1, thereby receiving the same data voltage. The data voltage is a voltage corresponding to luminance for display by the first pixel and the second pixel, and the difference between a reference voltage Vcom and the data voltages transmitted to the first pixel electrode and the second pixel electrode becomes the charge voltage of the first liquid crystal capacitor Clch and the second liquid crystal capacitor Clcl. Also, the electric field value of the first subpixel PX1 and the second subpixel PX2 is determined according to the charge voltage of the first liquid crystal capacitor Clch and the second liquid crystal capacitor Clcl. In exemplary embodiments of the present invention, the input terminals of the first pixel switching element Qp1 and the second pixel switching element Qp2 are applied with the same data voltage during turn-on of the first gate line G1 such that the charge voltage of the first liquid crystal capacitor Clch and the second liquid crystal capacitor Clcl are equal to each other.

Also, the first capacitor Cst1 is charged by the first voltage Vcst1 flowing to the first voltage line S1 through the turned-on first switching element Q1 during of the on state of the first gate line G1.

Next, when the second gate line G2 of the next gate line is in the on state, the first pixel switching element Qp1 and the second pixel switching element Qp2 are in the off state such that the first liquid crystal capacitor Clch and the second liquid crystal capacitor Clcl of the first subpixel PX1 and the second subpixel PX2 are no longer charged.

Also, the second voltage Vcst2 flowing to the second voltage line S2 is transmitted to the first capacitor Cst1 and the second capacitor Cst2 through the turned-on second switching element Q2. The voltage of the first capacitor Cst1 and the second capacitor Cst2 is increased by a difference between the first voltage Vcst1 and the second voltage Vcst2 such that the voltage of the first liquid crystal capacitor Clch connected to the first capacitor Cst1 and the voltage of the second liquid crystal capacitor Clcl connected to the second capacitor Cst2 are increased. Accordingly, although the on signal of the gate line is not long, the pixel voltage may be sufficiently obtained. Here, the first voltage Vcst1 applied to the first voltage line S 1 and the second voltage Vcst2 of the second voltage line Vcst2 have inverted polarities with respect to the common voltage Vcom.

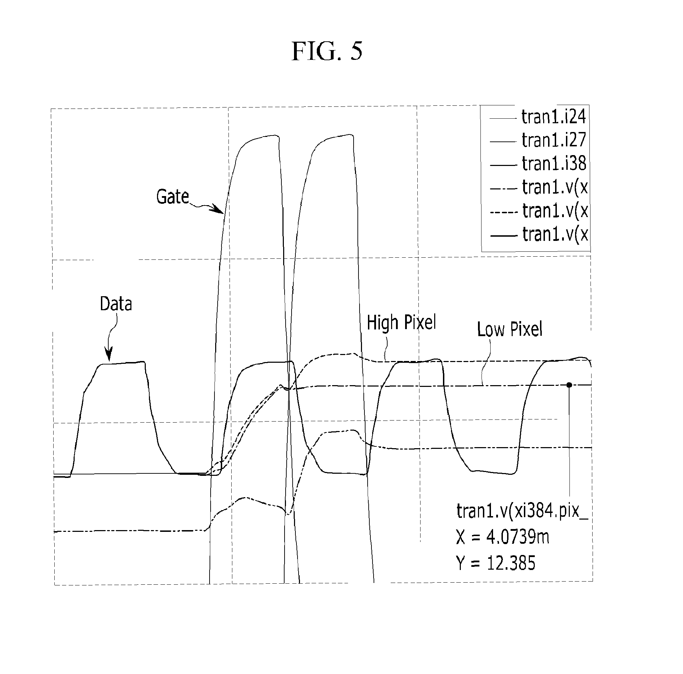

This will be described with reference to FIG. 5.

FIG. 5 is a graph showing exemplary simulations of driving of a liquid crystal display including the driving circuit of FIG. 3. Here, Cst1 is about 0.063pF, Csth is about 0.059pF, Clcl is about 0.796pF, and Clch is about 0.359pF such that Cst1/Clcl of about 0.08 and Csth/Clch of about 0.16 are input.

As shown in FIG. 5, it is illustrated that the voltage of the first subpixel and the second subpixel is increased (a red colored line) during the period that the first gate line G1 represented by a yellow colored line is in the on state, however the first subpixel and the second subpixel are not charged to the desired data voltage such as toa green colored line. The first subpixel and the second subpixel are charged with the same value.

Next, it is illustrated that the voltage of the first subpixel is increased to the desired data voltage if the second gate line G2 is in the on state. Also, the voltage of the second subpixel is also increased, however it is increased with a lesser value than the voltage of the first subpixel, as described above. Here, the ratio of the voltage of the second subpixel to the voltage of the first subpixel is about 0.893, and the charging ratio of the first liquid crystal capacitor Clch is about 101.5% of the data voltage, thereby obtaining the desired data voltage.

In the conventional art, the on period of the first gate line G1 is short such that the liquid crystal capacitor is charged during a period of two times the period in which the first gate line G1 of the present invention is turned on by applying the gate-on signal to two row pixels to obtain the luminance required in the first subpixel. As described above, although the liquid crystal capacitor is charged during the period of two times, the charging ratio is less than the present invention as about 95.27% of the data voltage.

Also, like the conventional art, if the charging time of the pixel is increased by using the gate lines of two rows, different data lines must be connected for the row to transmit the different data voltages, and thereby the number of the data line is increased.

However, in exemplary embodiments of the present invention, the desired luminance may be obtained by using the second switching element Q2 and the voltage line even though the same data line is used by two neighboring data lines such that the number of data lines may be reduced.

Meanwhile, in FIG. 3, when the voltage at the position N1 is referred to as Vh1, the voltage at the position N2 is referred to as Vh2, the voltage at the position N3 is referred to as V11, and the voltage at the position N4 is referred to as V12, the voltage of Vh1 may be obtained by Equation 1.

$$[\text{Equation 1}]$$

$$CVh2=Clch*Vh1$$

$$Vh1=C/Clch*Vh2$$

$$Vh1=Cst1/Cst1+Clch*Vh2$$

$$Vh1=1/(1+Clch/Cst1*Vh2=1/(1+1/Cst1/Clch*Vh2$$

Accordingly, when the first gate line G1 becomes off and the second gate line G2 becomes on, the increased voltage of Vh1 may be obtained by Equation 2.

$$[\text{Equation 2}]$$

$$\Delta Vh1=1/(1+Clch/Cst1*Vh2=1/(1+1/Cst1/Clch*\Delta Vh2$$

The voltage of N3 and N4 is obtained as in the following Equation 3.

[Equation 3]

$$\Delta Vl1=1/(1+Clcl/Cst2)*Vl2=1/(1+1/Cst2/Clc2)*\Delta Vl2$$

Referring to Equation 1, Equation 2 and Equation 3, $\Delta Vh1$ and $\Delta V11$ may be changed by the value of Cst1 and Cst2. Accordingly, in the exemplary embodiments of the present invention, $\Delta Vh1/\Delta V11>1$ may be obtained by controlling an electrode area of the first capacitor and the second capacitor.

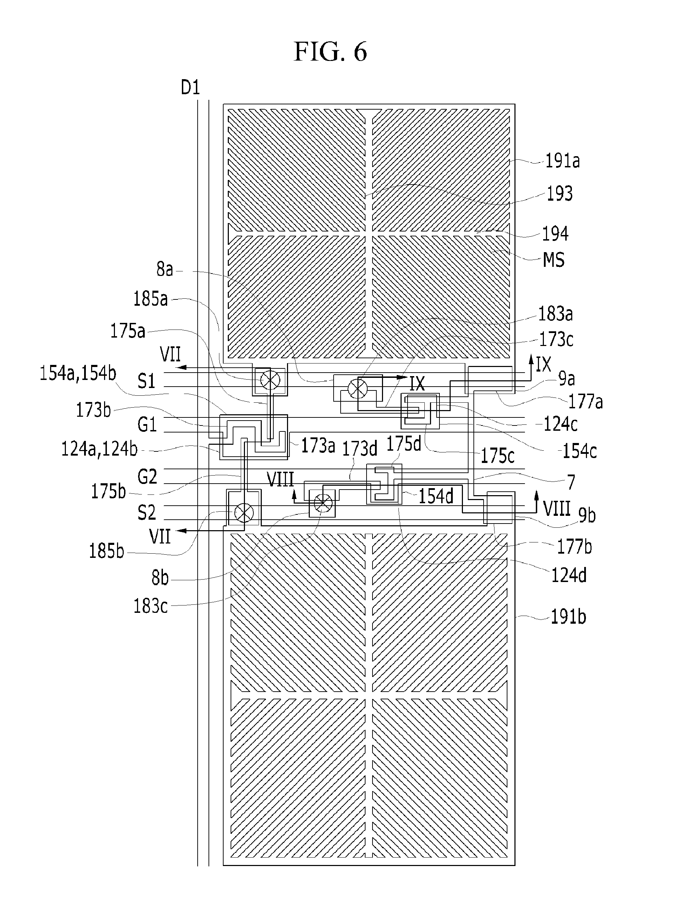

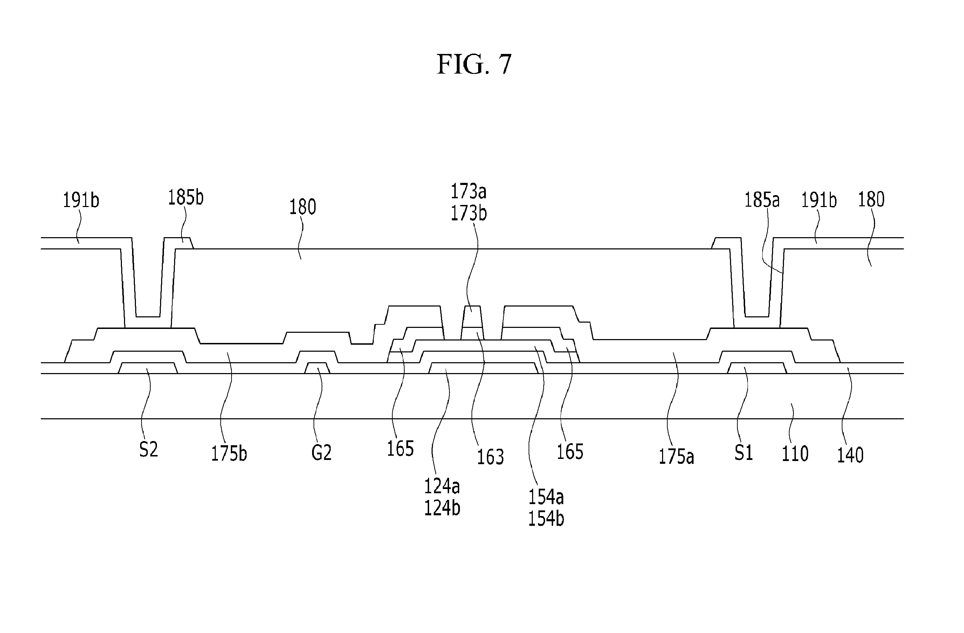

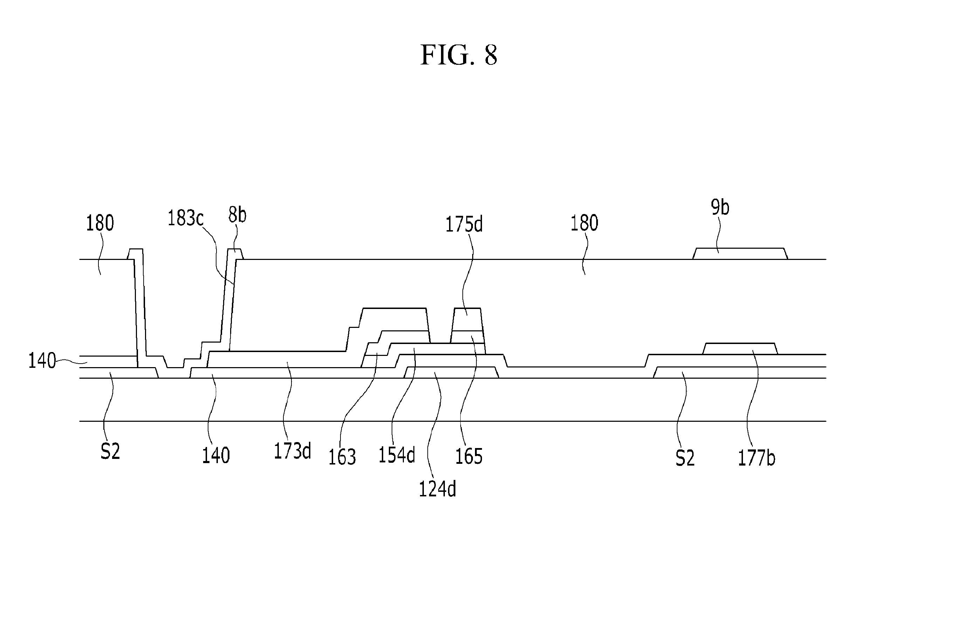

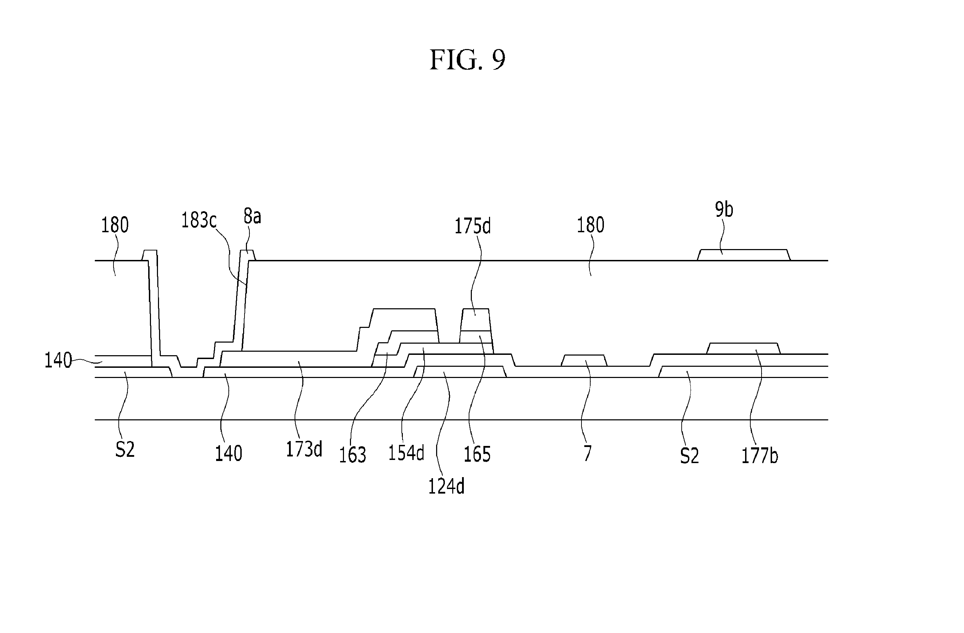

In this example, if the voltages of the first liquid crystal capacitor and the second liquid crystal capacitor according to $\Delta Vh1$ and $\Delta V11$ are different, the luminance of the first pixel and the second pixel are also different. Accordingly, the side visibility of the liquid crystal display may be improved by controlling the charge capacitances of the first capacitor and the second capacitor. FIG. 6 is a layout view of a pixel of a thin film transistor array panel including the driving circuit of FIG. 3, FIG. 7 is a cross-sectional view taken along the line VII-VII of FIG. 6, FIG. 8 is a cross-sectional view taken along the line VIII-VIII of FIG. 6, and FIG. 9 is a cross-sectional view taken along the line IX-IX of FIG. 6.

Referring to FIG. 6, FIG. 7, FIG. 8 and FIG. 9, for example, a gate conductor including the first gate line G1, the second gate line G2, the first voltage line S1, and the second voltage line S2 is formed on an insulation substrate 110 made of transparent glass or plastic.

The first gate line G1 has a first gate electrode 124a, a second gate electrode 124b, and a third gate electrode 124c protruding from the first gate line G1 up or down, and the second gate line G2 has a fourth gate electrode 124d. The first gate line G1 and the second gate line G2 have an end portion (not shown) having a wide area for connection to other layers or an external driving circuit. The first gate electrode 124a and the second gate electrode 124b may be connected.

The first voltage line S 1 and the second voltage line S2 extend in the same direction as the first gate line G1 and the second gate line G2, and the first gate line G1 and the second gate line G2 are positioned between the first voltage line S 1 and the second voltage line S2.

As an example, a gate insulating layer 140 is formed on the gate conductor.

A first semiconductor 154a, a second semiconductor 154b, a third semiconductor 154c, and a fourth semiconductor 154d that may be made of amorphous silicon or crystalline silicon are positioned on the gate insulating layer 140.

The first semiconductor 154a, the second semiconductor 154b, the third semiconductor 154c, and the fourth semiconductor 154d respectively overlap the first gate electrode 124a, the second gate electrode 124b, the third gate electrode 124c, and the fourth gate electrode 124d. The first semiconductor 154a and the second semiconductor 154b may be connected.

Ohmic contacts 163 and 165 are respectively formed in pairs on the first semiconductor 154a, the second semiconductor 154b, the third semiconductor 154c, and the fourth semiconductor 154d.

The ohmic contacts 163 and 165 may be made of a material such as n+ hydrogenated amorphous silicon in which an n-type impurity such as phosphorus is doped at a high concentration, or of silicide.

A data conductor including a data line D1, a third source electrode 173c, a fourth source electrode 173d, a first drain electrode 175a to a fourth drain electrode 175d, a first metal pattern 177a, a second metal pattern 177b, and a metal pattern connection 7 is formed on the ohmic contacts 163 and 165 and the gate insulating layer 140.

The data line D 1 transmits the data signal and extends mainly in a longitudinal direction, thereby intersecting the gate lines G1 and G2. The data line D 1 has a second source electrode 173b extending toward the first gate electrode 124a and the second gate electrode 124b and a first source electrode 173a connected to the second source electrode 173b. The third source electrode 173c and the fourth source electrode 173d respectively overlap the third semiconductor 154c and the fourth semiconductor 154d. For example, the first source electrode 173a, the second source electrode 173b, the third source electrode 173c and the fourth source electrode 173d are curved with a $\cap$ shape, a U shape, a $\subset$ shape, or a $\supset$ shape.

The first drain electrode 175a, the second source electrode 173b, the third source electrode 173c and the fourth drain electrode 175d include a bar portion extending in an upper, a lower, a right, or a left direction, and an expansion being wider than the bar portion and positioned at one end of the bar portion. The bar portions are respectively enclosed by the first source electrode 173a, the second source electrode 173b, the third source electrode 173c and the fourth source electrode 173d.

The first metal pattern 177a overlaps the first voltage line S1, and the second metal pattern 177b overlaps the second voltage line S2. The first metal pattern 177a and the second metal pattern 177b are connected by the metal pattern connection 7. The third drain electrode 175c and the fourth drain electrode 175d are connected to the metal pattern connection 7.

The first gate electrode 124a, the first semiconductor 154a, the first source electrode 173a, and the first drain electrode 175a form the first pixel switching element Qp1, the channel of the first pixel switching element Qp1 is formed in the first semiconductor 154a between the first source electrode 173a and the first drain electrode 175a, the second gate electrode 124b, the second semiconductor 154b, the second source electrode 173b, and the second drain electrode 175b form the second pixel switching element Qp2, and the channel of the second pixel switching element Qp2 is formed in the second semiconductor 154b between the second source electrode 173b and the second drain electrode 175b.

Also, the third gate electrode 124c, the third semiconductor 154c, the third source electrode 173c, and the third drain electrode 175c form the first switching element Q1, the channel of the first switching element Q1 is formed in the third semiconductor 154c between the third source electrode 173c and the third drain electrode 175c, the fourth gate electrode 124d, the fourth semiconductor 154d, the fourth source electrode 173d, and the fourth drain electrode 175d form the second switching element Q2, and the channel of the second switching element Q2 is formed in the fourth semiconductor 154d between the fourth source electrode 173d and the fourth drain electrode 175d.

For example, a passivation layer 180 made of an organic insulator is formed on the data conductor.

In this example, the passivation layer 180 has a first contact hole 185a exposing the first drain electrode 175a, a second contact hole 185b exposing the second drain electrode 175b, a third contact hole 183a exposing the third drain electrode 175c and the first voltage line S1, and a fourth contact hole 183b exposing the fourth drain electrode 175d and the second voltage line S2.

The third contact hole 183a simultaneously exposes the third drain electrode 175c and the first voltage line S1, however it may be formed to separately expose the third drain electrode 175c and the first voltage line S 1 (not shown). The fourth contact hole 183b may be divided like the third contact hole 183a.

A plurality of first pixel electrodes 191a and second pixel electrodes 191b and connecting members 8a and 8b that may be made a transparent conductive material such as indium tin oxide (ITO) or indium zinc oxide (IZO) or a reflective metal such as aluminum, silver, chromium, or alloys thereof are formed on the passivation layer 180.

For example, the first pixel electrode 191a is connected to the first drain electrode 175a through the first contact hole 185a, thereby receiving the data signal from the first drain electrode 175a. Also, the second pixel electrode 191b is connected to the second drain electrode 175b through the second contact hole 185b, thereby receiving the data signal from the second drain electrode 175b.

The first pixel electrode 191a and the second pixel electrode 191b are formed in an approximate quadrangle and are positioned at the other side with respect to the first voltage line S1 and the second voltage line S2, and the area of the second pixel electrode 191b may be about two times the area of the first pixel electrode 191a. The first pixel electrode and the second pixel electrode have different areas such that the charge capacitances of the first liquid crystal capacitor and the second liquid crystal capacitor are different, thereby obtaining the different luminances. Accordingly, the side visibility of the liquid crystal display may be improved by appropriately controlling the areas of the first pixel electrode and the second pixel electrode along with the charge capacitance of the first capacitor and the second capacitor.

The first pixel electrode 191a and the second pixel electrode 191b respectively include a plurality of minute slits MS. The first pixel electrode 191a and the second pixel electrode 191b respectively include a cross-shaped stem that is formed of a transverse stem 193 and a vertical stem 194 that is perpendicular thereto. They are respectively divided into four subregions by the transverse stem 193 and the longitudinal stem 194, and each region includes a plurality of minute slits MS.

The minute slits MS obliquely extend from the transverse stem 193 and the longitudinal stem 194, and the minute slit MS in each subregion extend in the same direction. The width of the minute slit MS is in the range of about 2.5μm to about 5.0μm, and the interval between two neighboring minute slits MS is in the range of about 2.5μm to about 5.0μm.

Meanwhile, the first pixel electrode 191a has a protrusion 9a overlapping the first metal pattern 177a, and the second pixel electrode 191b has a protrusion 9b overlapping the second metal pattern 177b.

In this example, if the minute slit is formed, the edges of the minute slits distort the electric field thereby making the horizontal component perpendicular to the edges of the minute slits and an inclination direction of liquid crystal molecules (not shown) is determined in the direction determined by the horizontal component. For example, the liquid crystal molecules initially tend to incline in the direction perpendicular to the edge of the minute slits. However, the directions of the horizontal components of the electric field by the edge of the neighboring minute slits are opposite, and the interval between the minute slits is very narrow such that the liquid crystal molecules that tend to incline in the opposite direction to each other are tilted in the direction parallel to the length direction of the minute slits.

Here, in exemplary embodiments of the present invention, the length direction in which the minute slits of one pixel extend is four directions such that the inclined directions of the liquid crystal molecules are four directions. Therefore, the viewing angle of the liquid crystal display is widened by varying the inclined directions of the liquid crystal molecules.

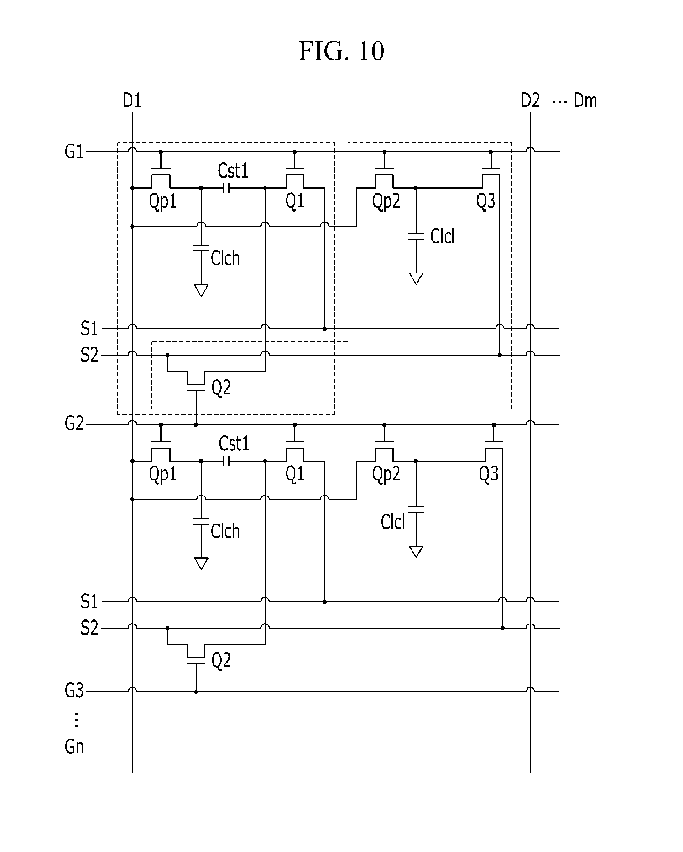

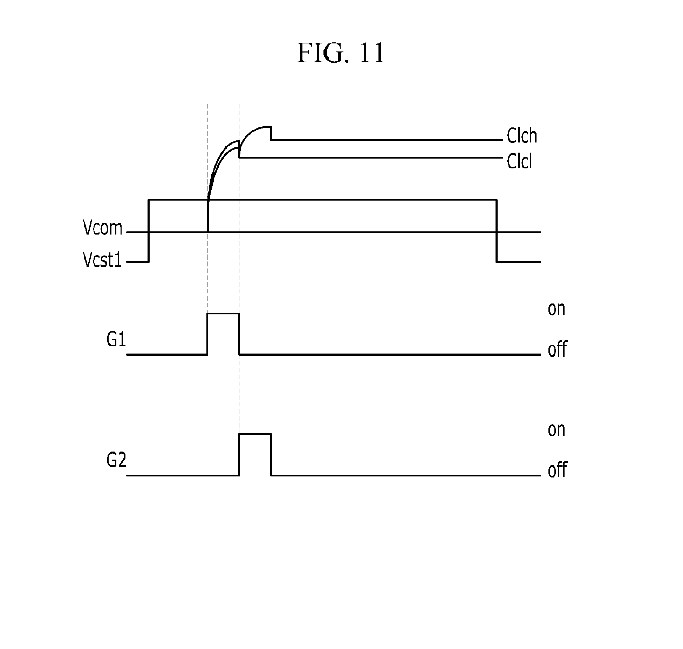

FIG. 10 is a circuit diagram of a driving circuit of a liquid crystal display according to exemplary embodiments of the present invention, and FIG. 11 is a view to explain a voltage variation of timing of a gate signal applied to the driving circuit of FIG. 10.

Referring to FIG. 10 and FIG. 11, a driving method of a liquid crystal display according to exemplary embodiments of the present invention will be described.

Firstly, referring to FIG. 10 and FIG. 11, if the first gate line G1 is applied with the gate-on voltage, the data voltage is applied to the first pixel electrode and the second pixel electrode through the turned on first pixel switching element Qp1 and second pixel switching element Qp2. Also, the first voltage flowing through the first voltage line S 1 is applied to the first capacitor Cst1 through the turned on first switching element Q1, and the second voltage flowing through the second voltage line S2 is applied to the third switching element Q3 through the turned on second switching element Q2.

The first pixel switching element Qp1 and the second pixel switching element Qp2 are transmitted with the same data voltage, however the second pixel electrode is applied with a lower voltage than the first pixel electrode because of the size difference between the first pixel switching element Qp1 and the second pixel switching element Qp2.

Also, when the second pixel switching element Qp2 and the third switching element Q3 are turned on, it may be regarded that the second pixel switching element Qp2 and the third switching element Q3 function as a conductor and the second pixel switching element Qp2 and the third switching element Q3 are resistors having the different values, and thereby the voltage division is generated between the second pixel switching element and the third switching element Q3 such that the voltage transmitted to the second pixel electrode through the second pixel switching element Qp2 is always lower than the voltage transmitted to the first pixel electrode through the first pixel switching element Qp1.

The data voltage of the first subpixel PX1 and the second subpixel PX2 and the first voltage applied to the first voltage line S 1 have opposite polarities with respect to the common voltage Vcom, and the polarities of the first voltage and the second voltage are opposite to each other.

Next, if the second gate line G2 as the next gate line enters the on state, the first pixel switching element Qp1 connected to the first gate line G1 and the second pixel switching element Qp2 connected to the first gate line G1 enter the off state such that the first liquid crystal capacitor Clch and the second liquid crystal capacitor Clcl of the first subpixel PX1 and the second subpixel PX2 are no longer charged. Also, the third switching element Q3 connected to the first gate line G1 is in the off state such that the second voltage line S2 is not connected to the second liquid crystal capacitor Clcl of the second subpixel PX2 any longer.

Also, the second voltage Vcst2 flowing to the second voltage line S2 through the turned on second switching element Q2 is transmitted to the first capacitor Cst1. The voltage of the first capacitor Cst1 is increased by the difference between the first voltage and the second voltage such that the voltage of the first liquid crystal capacitor Clch connected to the first capacitor Cst1 is increased. Accordingly, the pixel voltage of the first subpixel is increased. This is the same as the increasing method of the voltage of the first subpixel PX1 of the driving circuit of FIG. 3.

However, no more voltage is transmitted to the second liquid crystal capacitor Clcl of the second subpixel PX2 from the second voltage line S2 such that the pixel voltage of the second subpixel is not increased.

In the exemplary embodiment of FIG. 3, the voltages of the first subpixel PX1 and the second subpixel PX2 are increased together to increase the entire driving voltage, however in the exemplary embodiment of FIG. 10, the difference between the driving voltages of the first subpixel PX1 and the second subpixel PX2 may be increased.

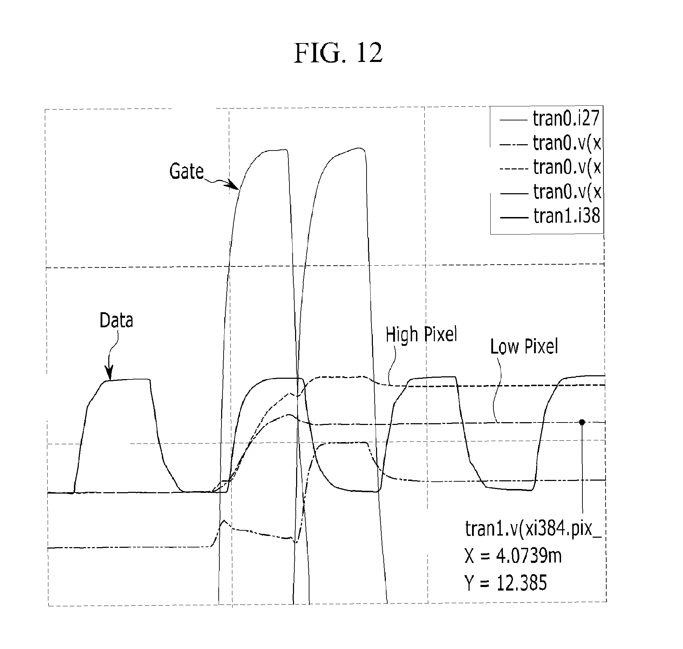

FIG. 12 is a graph showing simulations of a liquid crystal display including the driving circuit of FIG. 6. Here, Cstl is 0.063pF, Csth is 0.059pF, Clcl is 0.796pF, and Clch is 0.359pF such that Cst1/Clcl of 0.08 and Csth/Clch of 0.16 are input.

As shown in FIG. 12, when the first gate line G1 indicated by the yellow colored line is on, it may be seen that the voltage of the first pixel is increased (the red colored line), however the voltage is not charged to the desired data voltage (the green colored line).

However, if the second gate line G2 is on, it is illustrated that the voltage of the first subpixel PX1 is increased to the desired data voltage. The voltage of the second subpixel PX2 is charged less than the voltage of the first subpixel PX1 by a predetermined magnitude.

Next, if the second gate line G2 is on, it is illustrated that the voltage of the first subpixel PX1 is increased to the desired data voltage. However, the voltage of the second subpixel PX2 is no longer increased. Accordingly, the voltage difference between the first subpixel PX1 and the second subpixel PX2 is increased differently from the exemplary embodiment of FIG. 3 such that the ratio of the pixel voltage of the second subpixel PX2 for the pixel voltage of the first subpixel PX1 is about 0. 815. Here, it may be known that the voltage charging ratio of the first subpixel PX1 is about 98.05% that is close to the desired data voltage.

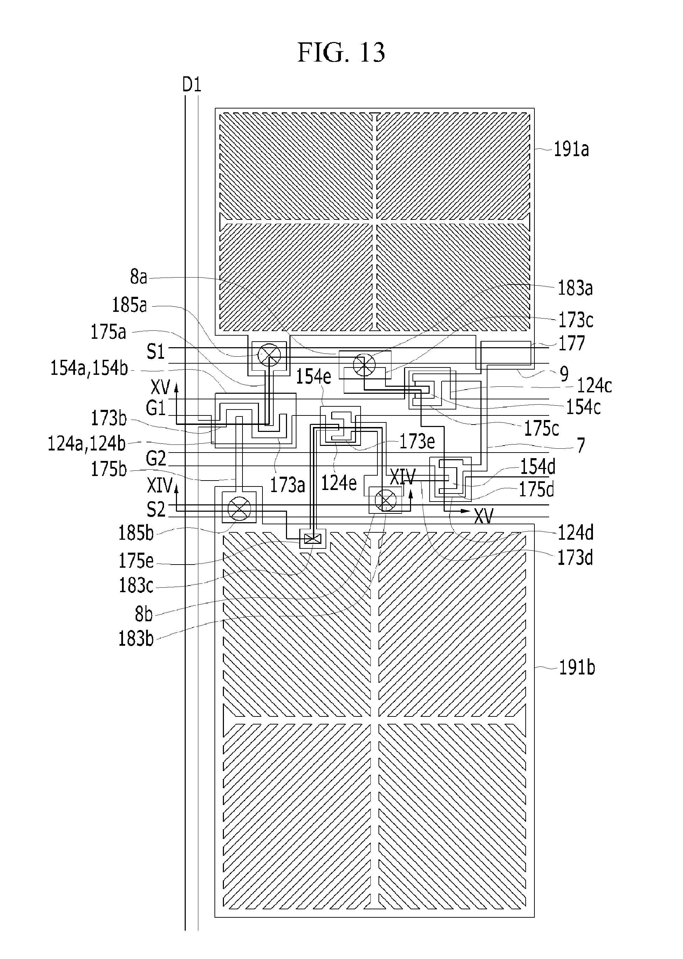

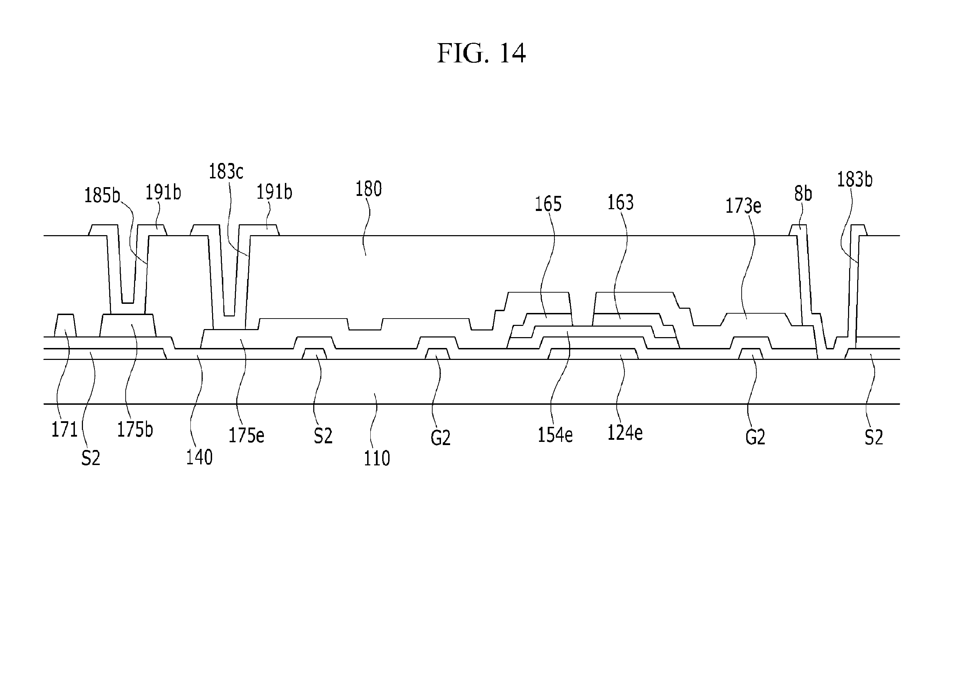

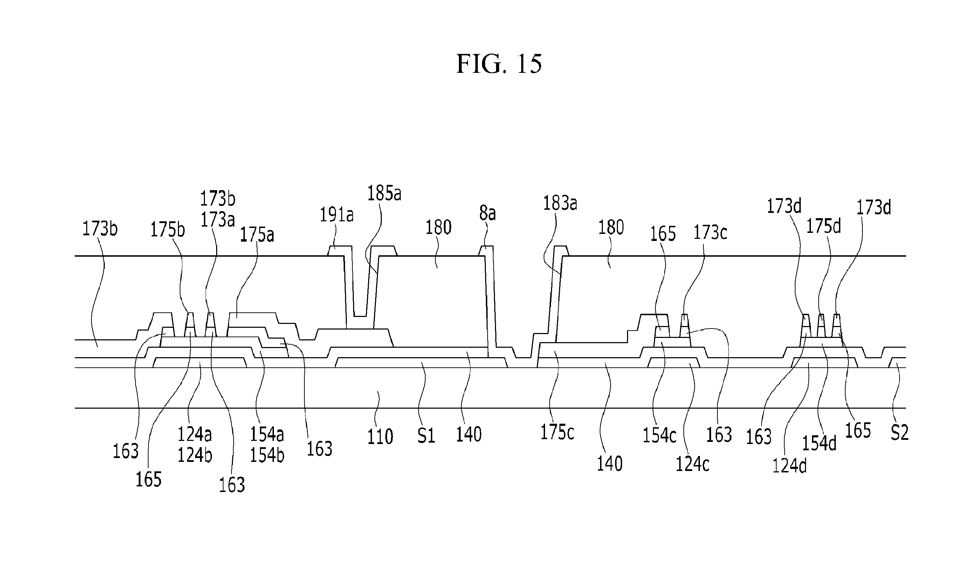

FIG. 13 is a layout view of a pixel of a thin film transistor array panel including the driving circuit of FIG. 10, FIG. 14 is a cross-sectional view taken along the line XIV-XIV of FIG. 13, and FIG. 15 is a cross-sectional view taken along the line XV-XV of FIG. 13.

Referring to FIG. 13, FIG. 14 and FIG. 15, for example, a gate conductor including a first gate line G1, a second gate line G2, a first voltage line S1, and a second voltage line S2 is formed on an insulation substrate 110 made of transparent glass or plastic.

**[0111]** In this example, the first gate line G1 has a first gate electrode 124a, a second gate electrode 124b, a third gate electrode 124c, and a fifth gate electrode 124e protruded from the first gate line G1 up or down, and the second gate line G2 has a fourth gate electrode 124d. The first gate line G1 and the second gate line G2 have an end portion (not shown) having a wide area for connection to other layers or an external driving circuit. The first gate electrode 124a and the second gate electrode 124b may be connected.

**[0112]** The first voltage line S 1 and the second voltage line S2 extend in the same direction as the first gate line G1 and the second gate line G2, and the first gate line G1 and the second gate line G2 are positioned between the first voltage line S1 and the second voltage line S2.

**[0113]** For example, a gate insulating layer 140 is formed on the gate conductor.

**[0114]** A first semiconductor 154a, a second semiconductor 154b, a third semiconductor 154c, a fourth semiconductor 154d, and a fifth semiconductor 154e that may be made of amorphous silicon or crystalline silicon are positioned on the gate insulating layer 140.

**[0115]** The first semiconductor 154a, the second semiconductor 154b, the third semiconductor 154c, the fourth semiconductor 154d, and the fifth semiconductor 154e respectively overlap the first gate electrode 124a, the second gate electrode 124b, the third gate electrode 124c, the fourth gate electrode 124d, and the fifth gate electrode 124e. The first semiconductor 154a and the second semiconductor 154b may be connected.

**[0116]** For example, ohmic contacts 163 and 165 are respectively formed in pairs on the first semiconductor 154a, the second semiconductor 154b, the third semiconductor 154c, the fourth semiconductor 154d, and the fifth semiconductor 154e.

**[0117]** The ohmic contacts 163 and 165 may be made of a material such as n+ hydrogenated amorphous silicon in which an n-type impurity such as phosphorus is doped at a high concentration, or of silicide.

**[0118]** A data conductor including a data line D1, a third source electrode 173c, a fourth source electrode 173d, a fifth source electrode 173e, a first drain electrode 175a to a fifth drain electrode 175e, a metal pattern 177, and a metal pattern connection 7 is formed on the ohmic contacts 163 and 165 and the gate insulating layer 140.

**[0119]** The data line D 1 transmits the data signal and extends in a mainly longitudinal direction, thereby intersecting the gate lines G1 and G2. The data line D1 has the second source electrode 173b extending toward the first gate electrode 124a and the second gate electrode 124b and the first source electrode 173a connected to the second source electrode 173b. The third source electrode 173c and the fourth source electrode 173d respectively overlap the third semiconductor 154c and the fourth semiconductor 154d. For example, the first source electrode 173a, the second source electrode 173b, the third source electrode 173c, the fourth source electrode 173d and the fifth source electrode 173e are curved with a ∩ shape, a U shape, a ⊂ shape, or a ⊃ shape.

**[0120]** The first drain electrode 175a, the second source electrode 173b, the third source electrode 173c, the fourth source electrode 173d and the fifth drain electrode 175e include a bar portion extending in upper, lower, right, or left directions, and an expansion having a wider area than the bar portion and positioned at one end of the bar portion. The bar portions are respectively enclosed by the first source electrode 173a, the second source electrode 173b, the third source electrode 173c, the fourth source electrode 173d and the fifth source electrode 173e.

**[0121]** The metal pattern 177 overlaps the first voltage line S1, and is connected to the third drain electrode 175c and the fourth drain electrode 175d by the metal pattern connection 177c.

**[0122]** The first gate electrode 124a, the first semiconductor 154a, the first source electrode 173a, and the first drain electrode 175a form the first pixel switching element Qp1, and the second gate electrode 124b, the second semiconductor 154b, the second source electrode 173b, and the second drain electrode 175b form the second pixel switching element Qp2.

**[0123]** Also, the third gate electrode 124c, the third semiconductor 154c, the third source electrode 173c, and the third drain electrode 175c form the first switching element Q1, the fourth gate electrode 124d, the fourth semiconductor 154d, the fourth source electrode 173d, and the fourth drain electrode 175d form the second switching element Q2, and the fifth gate electrode 124e, the fifth semiconductor 154e, the fifth source electrode 175e, and the fifth drain electrode 175e form the third switching element Q3.

**[0124]** A passivation layer 180 made of the organic insulator is formed on the data conductor.

**[0125]** For example, the passivation layer 180 has a first contact hole 185a exposing the first drain electrode 175a, a second contact hole 185b exposing the second drain electrode 175b, a third contact hole 183a exposing the third drain electrode 175c and the first voltage line S1, a fourth contact hole 183b exposing the fourth drain electrode 175d and the second voltage line S2, and a fifth contact hole 183c exposing the fifth drain electrode 175e.

**[0126]** A plurality of he first pixel electrodes 191a and second pixel electrodes 191b and connecting members 8a and 8b that may be made a transparent conductive material such as indium tin oxide (ITO) or indium zinc oxide (IZO) or a reflective metal such as aluminum, silver, chromium, or alloys thereof are formed on the passivation layer 180.

**[0127]** The first pixel electrode 191a is connected to the first drain electrode 175a through the first contact hole 185a, thereby receiving the data signal from the first drain electrode 175a. Also, the second pixel electrode 191b is connected to the second drain electrode 175b through the second contact hole 185b, thereby receiving the data signal from the

second drain electrode 175b, and is connected to the fifth drain electrode 175e through the fifth contact hole 183c, thereby receiving the second voltage through and the fifth drain electrode 175e when the third switching element Q3 is turned on.

The area of the second pixel electrode 191b may be about two times the area of the first pixel electrode 191a.

For example, the first pixel electrode 191a and the second pixel electrode 191b respectively include a plurality of minute slits MS. The first pixel electrode 191a and the second pixel electrode 191b respectively include a cross-shaped stem that is formed of a transverse stem 193 and a vertical stem 194 that is perpendicular thereto. They are respectively divided into four subregions by the transverse stem 193 and the longitudinal stem 194, and each region includes a plurality of minute slits MS.

The minute slits MS obliquely extend from the transverse stem 193 and the longitudinal stem 194, and the minute slits MS in each subregion extend in the same direction. The width of the minute slits MS is in the range of about $2.5\mu$m to about $5.0\mu$m, and the interval between two neighboring minute slits MS is in the range of about $2.5\mu$m to about $5.0\mu$m. Meanwhile, the first pixel electrode 191a has a protrusion 9 overlapping the metal pattern 177.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

**Claims**

1. A display comprising:

   a substrate;
   a first gate line, a second gate line, and a data line formed on the substrate;
   a plurality of pixels comprising a first subpixel and a second subpixel connected to the first gate line and the data line, the first subpixel comprising a first subpixel electrode and the second subpixel comprising a second subpixel electrode;
   a first switching element connected to the first gate line and configured to control a voltage of a first capacitor connected to the first subpixel electrode; and
   a second switching element connected to the second gate line and configured to control the voltage of the first capacitor.

2. The liquid crystal display of claim 1, wherein
   the second switching element is configured to control the voltage of a second capacitor connected to the second subpixel electrode.

3. The liquid crystal display of claim 2, wherein
   an on signal is provided to the second gate line in response to detection of an off signal subsequent to receiving the on signal at the first gate line; and
   the first pixel voltage of the first subpixel and the second pixel voltage of the second subpixel are increased in response to detection of an on signal at the second gate line.

4. The liquid crystal display of claim 3, wherein
   the first pixel voltage and the second pixel voltage are different.

5. The liquid crystal display of claim 4, wherein
   the first pixel voltage is greater than the second pixel voltage.

6. The liquid crystal display of claim 3, further comprising:

   a first voltage line and a second voltage line being separated from the first gate line and the second gate line, wherein the first voltage line is connected to the first switching element, and
   the second voltage line is connected to the second switching element.

7. The liquid crystal display of claim 6, wherein
   the first voltage line and the second voltage line are applied with voltages comprising different polarities.

**8.** The liquid crystal display of claim 6, wherein
in response to detection of turned on of the second gate line, the first pixel voltage is increased according to a charge capacitance variation of the first capacitor, and the second pixel voltage is increased according to a voltage variation of the second capacitor.

**9.** The liquid crystal display of claim 8, wherein
the capacitance of the first capacitor is greater than the charge capacitance of the second capacitor.

**10.** The liquid crystal display of claim 9, wherein
the electrode area of the first capacitor is greater than the electrode area of the second capacitor.

**11.** The liquid crystal display of claim 2, further comprising:

a first pixel switching element connected to the first gate line and the data line, and the first subpixel electrode; and
a second pixel switching element connected to the first gate line, data line, and the second subpixel electrode.

**12.** The liquid crystal display of claim 1, further comprising:

a second capacitor connected to the second subpixel electrode; and
a third switching element connected to the second capacitor and configured to control the voltage of the second capacitor.

**13.** The liquid crystal display of claim 12, wherein
an on signal is provided to the second gate line in response to detection of an off signal subsequent to receiving the on signal at the first gate line; and
the first pixel voltage of the first subpixel is increased in response to detection of an on signal at the second gate line.

**14.** The liquid crystal display of claim 13, wherein
the first pixel voltage and the second pixel voltage of the second subpixel are different.

**15.** The liquid crystal display of claim 14, wherein
the first pixel voltage is greater than the second pixel voltage.

# FIG. 1

EP 2 518 717 A1

## FIG. 2

# FIG. 3

# FIG. 4

FIG. 5

## FIG. 6

FIG. 7

191b  185b  180  173a  173b  180  185a  191b  180

S2  175b  G2  165  124a 124b  163  154a 154b  165  175a  S1  110  140

**FIG. 8**

# FIG. 9

180    183c    8a                    175d              180              9b

140

S2         140      173d    163  154d   165        7          S2      177b

124d

## FIG. 10

# FIG. 11

# FIG. 12

# FIG. 13

## FIG. 14

EP 2 518 717 A1

# FIG. 15

EP 2 518 717 A1

| | Europäisches Patentamt European Patent Office Office européen des brevets | **EUROPEAN SEARCH REPORT** | Application Number EP 11 18 2665 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 2010/157185 A1 (KIM YOON-JANG [KR] ET AL) 24 June 2010 (2010-06-24) | 1-11 | INV. G09G3/36 |
| A | * paragraph [0038] - paragraph [0136]; figures 1,2,5,6 * | 12-15 | |
| | ----- | | |
| | | | TECHNICAL FIELDS SEARCHED (IPC) |
| | | | G09G |

The present search report has been drawn up for all claims

| Place of search | Date of completion of the search | Examiner |
| --- | --- | --- |
| The Hague | 30 July 2012 | Fanning, Neil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 18 2665

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2012

| Patent document cited in search report | Publication date | Patent family member(s) | Publication date |
|---|---|---|---|
| US 2010157185  A1 | 24-06-2010 | KR  20100070663  A<br>US   2010157185 A1 | 28-06-2010<br>24-06-2010 |

For more details about this annex : see Official Journal of the European Patent Office, No. 12/82